Europäisches Patentamt

European Patent Office

Office européen des brevets

(19)

(11) Publication number: 0 142 481

A2

(12) **EUROPEAN PATENT APPLICATION**

(21) Application number: 84850346.2

(22) Date of filing: 08.11.84

(51) Int. Cl.⁴: **G 01 N 21/17**

(30) Priority: 14.11.83 SE 8306246

(43) Date of publication of application:
22.05.85 Bulletin 85/21

(84) Designated Contracting States:
AT BE CH DE FR GB IT LI LU NL SE

(71) Applicant: McQueen, Douglas
Mäster Bengtsgatan 10
S-412 65 Göteberg(SE)

(71) Applicant: Helander, Per
Apelgatan 27
S-582 46 Linköping(SE)

(71) Applicant: Lundstrom, Ingemar
Färgaregatan 10
S-582 52 Linköping(SE)

(71) Applicant: Fondberg, Lars
Kampementsgatan 24
S-115 38 Stockholm(SE)

(72) Inventor: McQueen, Douglas
Mäster Bengtsgatan 10
S-412 65 Göteberg(SE)

(72) Inventor: Helander, Per
Apelgatan 27
S-582 46 Linköping(SE)

(72) Inventor: Lundstrom, Ingemar
Färgaregatan 10
S-582 52 Linköping(SE)

(72) Inventor: Fondberg, Lars
Kampementsgatan 24
S-115 38 Stockholm(SE)

(74) Representative: Roth, Ernst Adolf Michael et al,
GÖTEBORGS PATENTBYRA AB Box 5005
S-402 21 Göteborg(SE)

(54) A method for analysis of a sample of a substance by means of photoacoustic or optothermal spectroscopy and a sample carrier for performing of the method.

(57) A method for analysis by a sample of a substance by means of photoacoustic or optothermal spectroscopy. The sample of substance is applied on a sample carrier (13), which is so dimensioned that $0,01 \leq a.b \leq 10$ for the sample carrier with the sample at the intended wavelength and the modulation frequency, where a is the absorption coefficient of the sample and b is the thermal diffusion length for the sample at the intended modulation frequency. The sample carrier with sample is brought to close contact with the photoacoustic or optothermal detector (12) of the measurement cell, where the measuring can be carried out. For a sample carrier with several layers, the layer facing the detector is demensioned with a thickness which is at least one diffusion length b for the intended sample and the modulation frequency. The invention also relates to sample carriers intended to be used for performing the method.

FIG 1

EP 0 142 481 A2

Croydon Printing Company Ltd.

# A METHOD FOR ANALYSIS OF A SAMPLE OF A SUBSTANCE BY MEANS OF PHOTOACOUSTIC OR OPTOTHERMAL SPECTROSCOPY AND A SAMPLE CARRIER FOR PERFORMING OF THE METHOD

## Technical field

The present invention refers to a method and a sample carrier for analysis of a sample of a substance by means of photoacoustic or optothermal spectroscopy, at which the coefficient of light absorption and thermal diffusion length of the sample and sample carrier is determining for the measurement result. At optothermal spectroscopy the sample of a substance is placed in contact with a detector, (e.g. a temperature expansion element with a mechanoelectric or a mechanooptic transducer) and is illuminated by intensity-- modulated light of a certain wavelength, wherein any absorbed light by the sample causes temperature variations which are converted to an electrical or optical signal in the detector. At photoacoustic spectroscopy the sample is placed in contact with a gas or a liquid, which transmits the signal caused by any absorbed light to a microphone or a hydrophone. The light here refers to all forms of electromagnetic radiation, visible or non visible.

## Background of the invention

A common analysis method today is to utilize reflection spectroscopy for determination of the sample in a sample carrier. The sample carrier is illuminated by light of a desired wavelength from a certain angle, and the diffused reflecting light is detected, or alternatively the sample carrier is illuminated with diffused light (light from different directions). The detected light gives information about the absorption in the sample carrier and by that in the sample, which then can be converted to information about the contents of the sample.

Sample carriers for this purpose are well-developed and sophisticted. They can have several layers, which have

0142481

different functions: mechanical support, reagent carrier, separation layer, masking layer, collecting layer, etc. The layers can have different porosity and contain different reagents. Sample carriers of this kind can have a thickness of up to half a millimeter. They can be used for determination of blood and other samples. For blood sample carriers have been developed for clinic-chemical as well as for hematologic analysises. Similar systems have been developed for analysises in other fluids.

Characteristic for reflection spectroscopy is that the result is dependent on both absorption and scattering within the sample. According to the accepted Kubelk-Munk therory for reflection spectroscopy , the amount of reflected light is proportional to the ratio between the absorption coefficient of the sample and its scattering coefficient. A conseqvence of this is that the result of the measuring does not change if a sample is diluted with a non-scattering and non-absorbing substance. The absorption coeffecient and the scattering coefficient are changed in the same proportion and ratio is unchanged. This is an inherent weakness of reflection spectroscopy when it concerns quantitative measurments.

The result for reflection spectroscopy on solid materials is for the same reason dependent on the structure of the sample. For example for powder it is very important to keep a certain well controlled particle size if it is intended to make quantitative measuiments, as the light scattering in the sample is strongly dependent on the size of the particles. This naturally has consequences for the designing of the sample carrier. A sample carrier for reflection spectroscopy must have very well-defined and constant light scattering characteristics. It has been shown that optothermal spectroscopy at certain conditions is less sensitive for light scattering in the sample and therefore is more suitable for quantitative measurements than reflection spectroscopy.

Furthermore it applies for reflection spectroscopy that the ratio between the amount of reflected light and the absorption coefficient is non linear, i. e. that a doubling of the concentration in a substance does not lead to a doubling of the signal, but rather less than a doubling of the signal. This must be compensated in the instrument.

Another disadvantage of reflection spectroscopy is that it is difficult to measure on a limited layer of a homogenous sample. How thick the layer is which is analyzed is determined only by the optic characteristics of the sample and therefore varies with e.g. proportion of absorbing substance in the sample. A consequence of this is that for many analysises of blood it is neccessary to remove the red blood cells before the analysis can take place, either by centrifugation or the like before the sample is applied on the sample carrier, or by a separation layer in the sample carrier, and in that case the red blood cells are rinsed or wiped away after a certain time.

A way of circumventing some disadvantages of reflection spectroscopy is to use optothermal spectroscopy and an optothermal detector according to the Swedish patent 424.024. A variant of an optothermal cell or detector consists of a temperature expansion element, e.g. a thin sapphire plate with a mechanoelectric or mechanooptic transducer, e.g. a piezo-electric ring glued on one of its sides. Intensity-modulated radiation is directed through the opening of the ring and through the sapphire against the sample on the other side of the sapphire. The heat generated from the light absorption causes a temperature expansion of the sapphire, which effects the piezo-electric crystal. The piezo-electric crystal generates a signal with the same frequency as the modulation frequency. Both the amplitude and the phase of the signal is used to obtain a result which is linearly proportional to the concentration of the absorbing substance in the sample over a very wide concentration field. The mechanooptic concentration of the optothermal detector is considerably simpler and more rugged than the corresponding construction of a reflectometer.

The light absorption in the sample takes place in a layer, the

thickness of which is determined by the power of absorption of the sample. The absorption decreases exponentially with the distance, and a profile is obtained for a non-scattering sample according to exp(-ax) in the sample, where x is depth and a is the absorption coefficient for the sample. The heat generated in the sample must diffuse to the sapphire during a modulation period in order to be detectable. The length of diffusion for the heat during a period is given by the thermal diffusion length b according to

$$b = \left(\frac{2k}{w \varrho \cdot c_p}\right)^{1/2} .$$

For diffusion applies an exponential law according to exp(-x/b). Here k is the thermal conductivity, w is the angular frequency of the light modulation of the chopper, $\varrho$ is the density of the sample and $c_p$ is the temperature capacity of the sample at constant pressure. For water and a modulation frequency of 100 Hz b=0.02=mm = 20 micrometer. If the moculation frequency is multiplied by four, the thermal diffusion length becomes halved.

These known facts for example makes it possible to measure the proportion of hemoglobin in a blood sample without measuring the volume of the blood sample, as the thermal diffusion length determines the quantity of the sample under the condition that the sample is thicker than some thermal diffusion lengths. Samples which are further away than some thermal diffusion lengths from the sapphire do not take part in the measured signal from the optothermal detector, even if light penetrates in this part of the sample. This is a determining difference between optothermal spectroscopy and reflection spectroscopy.

It can be pointed out that the signal from the optothermal detector contains information about the composition of the sample during the assumption that b.a is less than a certain value (ca. 10), which generally is the case for example with blood samples at the usual modulation frequencies (from some Hz to some hundred Hz).

## The object and most important features of the invention

The object of the present invention is to provide a method for analysis of a sample of substance in a photoacoustic or optothermal detector by using a sample carrier, which gives well defined measurment results. This has been obtained by the fact that the sample is applied on a sample carrier which is so dimensioned that 0,01<a.b<10 for the sample carrier with the sample at the intended wavelength and the modulation frequency, where a is the absorption coefficient of the sample with sample carrier at the intended wavelength and b is the thermal diffusion length for the sample with the sample carrier at the intended modulation frequency, that the sample carrier before or after application of the sample in the measurement cell is brought to close contact with the said detector and that afterwards radiation of the intended wavelength and the modulation frequency is directed towards the sample.

## Description of the drawings

The invention will now be described in more details with reference to some embodiments shown in the accompanying drawings.

Fig. 1 shows a variant of a optothermal measurement cell where a piezo-electric crystal is glued to the temperature expansion element (the detector).

Fig. 2 shows the light intensity inside a sample and the amplitude of the heat waves at four different depths in the sample. Determining for the magnutude of the signal is the amplitude of the heat waves, when they reach to the temperature expansion element. The curves in the figure is drawn for the case b.a=1.

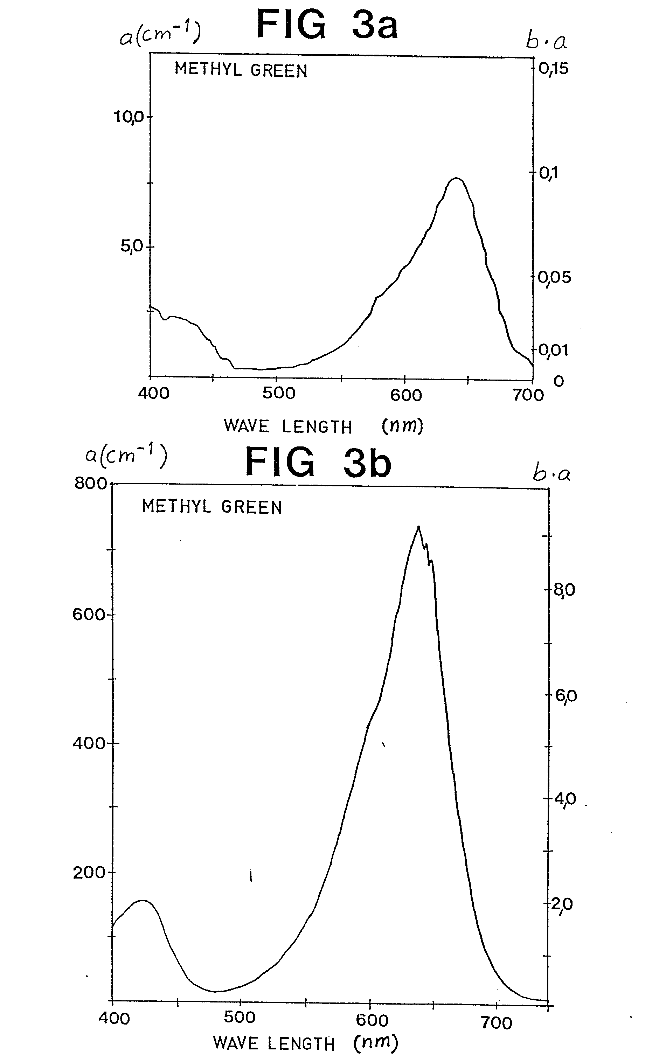

Fig. 3a and b shows optothermal spectra for methyl green in two different concentrations. These spectra show that it is possible to measure b.a-values from 0,01 to 10.

## Description of embodiments

A optothermal measurment cell, which per se is not a part of the invention, comprises a light passage 11, in which an expansion element (detector) 12, a plate of sapphire, quartz, glass or the like is placed. The sample 14 in a sample carrier 13 is placed in contact with the expansion element 12, which is in contact with a mechanoelectric transducer 15, e.g. a piezo-electric crystal, or alternatively a mechanooptic transducer. Modulated light of a certain wavelength is allowed to pass through the passage 11 and when the light is absorbed by the sample 14 a rise of temperature is obtained which is proportinal to the absorbed energy. Every light pulse which meets the sample causes a rise of temperature of the sample 14 and every interval between the pulses allows cooling of the sample.

The temperature variations in the sample 14 results in an alternating expansion and contraction of the expansion element 12 and this movement is converted by the transducer 15 to an electrical or optical signal, which is amplyfied and registered by a registration instrument.

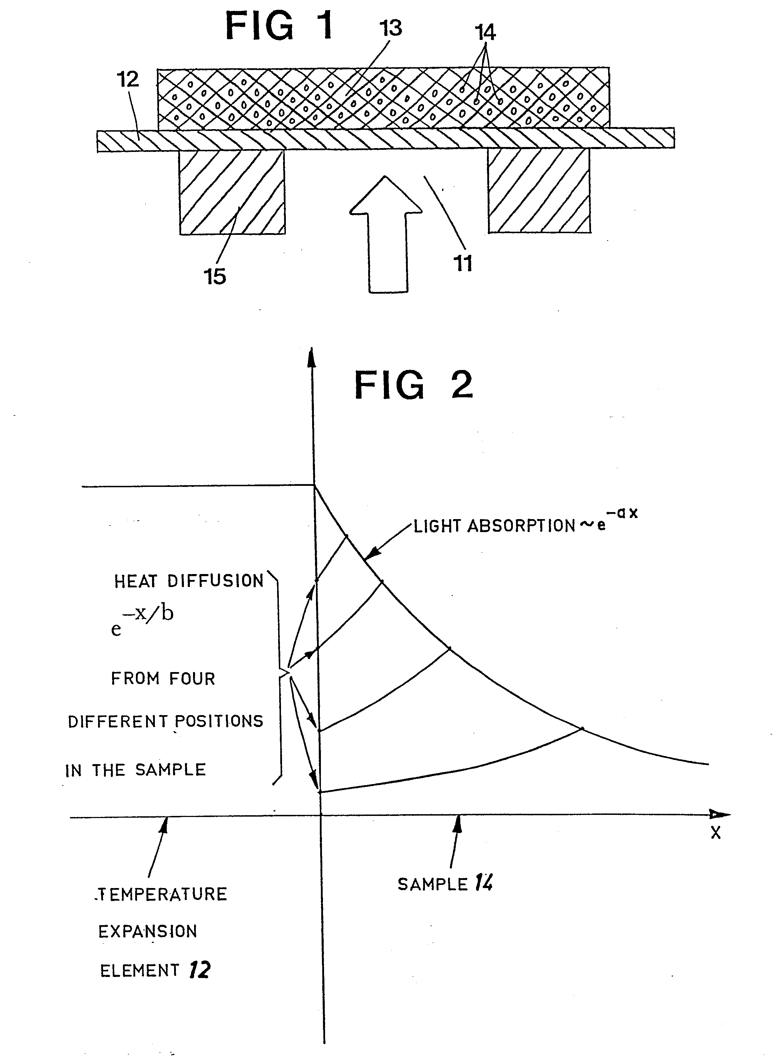

The sample 14, which consists of a solid material or a liquid, can be applied directly on the expansion element 12 or like according to the present invention, is applied on a sample carrier. In Fig. 1 is schematically illustrated a sample carrier 13 with a sample 14 applied on an expansion element 12 in an optothermal detector. Intensity-modulated radiation of a certain wavelength and modulation frequency is directed towards the sample. The light absorption of the sample is proportional to $e^{-ax}$, where a is the absorption coefficient of the sample and x is the distance from the expansion element. The absorption thus decreases exponentially with the distance according the curve indicated in figure 2.

The rise of the temperature of the sample is proortional to the light absorption and by that to $e^{-ax}$. The heat diffusion

from the sample to the expansion element is proportional to $e^{-x/b}$, where b is the thermal diffusion length which is defined above.

Dimensioning for the sample carrier is the product b.a, which from experience should be between 0,01-10 for making the measurment meaningful. If b.a is less than 0,01 the signal is drowned in back noise and background signal. If b.a exceeds 10 the signal is so strongly saturated that every determination of b.a out of one mesurement is very uncertain.

If b.a for the sample in question exceeds 10 b or a or both these factors must be reduced. A way to obtain a reducing of the absorption coefficient is naturally to dilute the sample. The absorption coefficient a can also be reduced if the sample carrier has a certain porosity so that the sample is "diluted" when it is applied on the sample carrier. The sample carrier in this case consists of a matrix which does not absorb the sample and with a suitable amount of cavities into which the sample can penetrate. The diffusion length b can be reduced if the matrix of the sample carrier has a low heat diffusivety and also per se a small b-value. The diffusion length b for the sample carrier with sample becomes less than b for only the sample. A combination of the above mentioned measures is of course possible.

In the case that a.b is between 0,01-10 for the sample itself (without sample carrier) the sample carrier should effect the characteristics of the sample as little as possible. The sample carrier should then absorb much liquid compared to its weight or volume. If the sample becomes a little diluted then it is applied on the sample carrier the reduction of a can partially be compensated by b being increased somewhat. The sample carrier itself should then have a high heat diffusivity $\alpha$, where $\alpha = \dfrac{2k}{\varrho \cdot c_p}$ t which k=the thermal conductivity of the sample carrier, $\varrho$=density of the sample carrier and c=the heat capacity of the sample carrier at constant pressure.

In the case b.a is less than 0,01 for the sample a or b must be increased. A way of increasing  b is to apply the sample on
a  sample carrier consisting of thin fibers, which are located
transversely to the surface of the  expansion  element.  These
fibers should should be thin and have a high heat conductivity
in orderto make b for the sample carrier with sample exceed  b
for only the sample.

If  the  sample  carrier consists of several layers, the layer
closest to the expansion element should be dimensioned in  the
above mentioned way.

If  the  sample carrier contains a colour reagent, this should
have such  a concentration that b.a falls within the  interval
0,01-10 when the colour has been generated.

The  above  conditions for b.a applies only for the wavelength
of the radiation with which the measurements are intened to be
performed, as  a varies with the wavelength. Furthermore the
modulation frequency should be within the interval 0,1  Hz-  1
kHz,  as the diffusion length b is dependent on the modulation
frequency.

There  are  also previously known sample carriers with several
layers  where  each  layer  has  different  function,  e.g.
filtration function, reagent adding function, etc. Such sample
carriers can with advantage be used together with  optothermal
spectroscopy, e.g. for analysis of blood.

To  obtain  this  one  can  use  the limited thermal diffusion
length as was defined above  in  order  to  dimension one  or
several  layers in the sample carrier. This makes it no longer
necessary to  make  a  special  separation  of  the  different
components  of  the  blood  before  or  during the measurment,
besides the separation which  takes  place  in  the  different
layers of the sample carrier.

This  can  be  illustrated  and  be  clarified  in a number of
embodiments. As the  first  example  one  can  make  a  sample
carrier  in  one layer so that for example the red blood cells are kept out from the layer, while the other blood components penetrates the layer. If this is at least one thermal diffusion length thick one can analyze the latter blood components without that the red blood cells interfere the measurment. The layer should also be so dimensioned that b.a is between ca. 0,01 and ca. 10.

As a second example one can make a sample carrier consisting of two layers, the bottom layer of which is at least one thermal diffusion length thick. Furthermore the bottom layer should be so dimensioned that b.a is between 0,01-10. Those two layers have different characteristics which makes it possible that some components remain in the upper layer while others , which are to be analyzed, pass to the bottom layer, which is in close contact with the expansion element in the optothermal detector. Irrespective of the chosen light length it is these sample components which are in the bottom layer which contributes to the signal in the instrument, while the sample components in the upper layer make very little contribute to the signal or non at all. If one works with a modulation frequency on 100 Hz the thickness of the bottom layer should be at least ca. 20 micrometer for a water solution. Observe that one does not need to rise or wipe away the sample components in the upper layer for performing the analysis.

As a third example the sample carrier can consist of three layers, a bottom layer at least one thermal diffusion length thick, an intermediate layer which acts like a barrier for some sample components, and an upper layer which receives the sample. The intermediate layer can for example have such a pore size that the red blood cells of the blood can not penetrate the layer. In this way the red blood cells are kept away from the bottom layer, where an optothermal analysis of other blood components can be performed.

As a fourth example the sample carrier can consist of four or several layers, where the bottom layer has a thickness exceeding than one thermal diffusion length, and the other layers make filtration functions and/or contains different reagents, etc. The selected and possibly chemically effected components of the sample treated in this way and which reach the bottom layer can be analyzed optothermally without being interfered from the components in the upper layers.

It is of course possible to vary the modulation frequency and the thermal diffusion length in the sample. One should therefore dimension the bottom layer of the sample carrier with respect to a certain modulation frequency or certain modulation frequencies. Today it is usual to use modulation frequencies of about 30 Hz, which means that a suitable minimum thickness for the bottom layer is 40 micrometer or thereabout. In order to obtain a specially good "insulation" of the signal from the bottom layer and signal from the upper layers one can increase the thickness of the bottom layer, to for example two or four thermal diffusion lengths. For each thermal diffusion length in the thickness for the bottom layer one gains a factor e=2.7 in "insulation".

A sample carrier does not necessarily need to be homogenous in its longitudinal direction, but it can have different areas with thinner and thicker layers, or layers with different characteristics. Such a sample carrier can be moved to different positions with respect to the optothermal detector and the light spot or the light spot could also be moved with respect to the sample carrier, at which different sample components are analyzed in the different parts of the sample carrier. Alternatively the optothermal detector could be designed so that different part of the sample carrier are effected in different ways, for example illuminated with light of different colours or with different modulation frequencies or with both different light wavelengths and modulation frequencies at the same time.

It is also possible if one desires to dimension several layers in one and the same sample carrier with respect to the thermal diffusion length. Supposing that one has a sample with a component A, which consists of two different types $A_1$, and $A_2$.

One will measure both the proportion of A and the proportion of $A_1$. One can make a sample carrier with a bottom layer B with two part layers $B_1$ and $B_2$. The sample components in A distribute in the layers $B_1$ and $B_2$ with $A_1$ in $B_1$ and $A_2$ in $B_2$. The thickness of the bottom layer $B_1$ is dimensioned to correspond to a modulation frequency $f_1$ so that the component $A_1$ is analyzed at this frequency. The thickness of the next layer $B_2$ is so dimensioned that at a modulation frequency $f_2$, which is lower than $f_1$, corresponding to the total thickness $B_1 + B_2$, the total quantity of the sample component A is analyzed. In this way one can make a "deep analysis" by changing the modulation frequency and using different thicknesses for the layers, dimensioned according to the respective thermal diffusion lengths.

One can also make analysises with two modulation frequencies at the same time. This can be suitable when one will study the absorption at two different light wavelengths at the same time. The two different light wavelengths obtain each its modulation frequency. Experimentally it has been found out that only a small difference in the modulation frequency is needed in order to provide an effective separation of the signals, for example 5 % frequency difference. In this case one can also dimension the layers of the sample carrier with respect to these two frequencies (for example its mean value) without loosing the advantages of using such a dimensioning. Corresponding arguments apply for three or several modulation frequencies and light wavelengths.

Several types of sample carriers can be developed for measuring of pH, concentration of molecyles, ions etc, and identification of particles and cells and determination of their numbers and size. Supposing for example that one has a sample carrier with a substance which specifically binds some chemichal, such as an enzym Z which is specific for a certain substrate S. The product P can have a light absorption which differs from the light absorption of Z and S, which makes an optothermal detection and by that a determination of the substrate S possible. If the light absorption of the product P is not special on this way. the sample carrier can even contain a chromophore R which at the reaction with the procduct P changes the colour so that the detection of P can be performed by measuring at an appropriate wavelength and the substrate S in this case can be determined. Thus one can apply the sample on the sample carrier and if the sample contains the substrate S the concentration of the substrate is optothermically determined by quantifying the product P or the chromophore R. The sample carrier with the enzym Z and possibly the chromophore R is so dimensioned that the product a.b is larger than ca. 0,01 and smaller than ca. 10 for P or P plus R considering the wavelength and modulation frequency. The sample carrier can naturally consist of one or several layers in order to perform necessary treatment of the sample (filtration, chemical treatment, dilution etc.)

If the expansion element is brought to contact with an agent which alters colour at the presence of a specific gas, one can then measure the gas concentration by means of the colour alteration. With a stratified sample carrier one can put filtration- and treatment layers, which are selective for the mentioned gas over the chromophore layer.

There are known well-defined plastic pellets with typical diameters corresponding the diameters of living cells. This can be provided with specific surface characteristics, etc. As typical diameters are about ten micrometer this coincides with one thermal diffusion length in many cases. Therefore it is possible to manufacture sample carriers for optothermal spectroscopy with a bottom layer consisting at least partly of such plastic pellets provided with certain characteristics. The sample, which is applied from above, does not interfere with the measurment as it is more than one thermal diffusion length away from the detector. Here one can also use the enzym-substrate procedure, for example. The pellets can naturally be of another material than plastic and they need not to be e.g. spherical, i.e. they can be denoted as particles.

In order to encase e.g. sensitive reagents in the sample carrier during transport, a protective layer can be arranged on the outside of this, which can be removed before the application of the sample. Between the active layers of the sample carrier, there can also be arranged similar protective layers, which prevent the reagents from passing from one layer to another and which can be removed before the measurement as well.

Further applications for stratified sample carriers are in chemical process control and in column control (Sephadex and similar columns).

It is necessary that the sample carrier is in thermal contact with the detector during the measurement. This can be obtained by exerting a physical pressure on the sample carrier or also by chemically binding the sample carrier to the detector. Thus the sample carrier can be brought to the close contact with the detector either "temporarily" or "permanently".

The invention is of course not restricted to the example mentioned above but can be varied within the scope of the following claims. The method and the sample carrier have been described and examplified referring to optothermal spectroscopy but are also applicable at photoacoustic spectroscopy (according to e.g. US patent 3.948.345) and optothermal spectroscopy according to other embodiments than those which were described above. The method and the sample carrier are applicable whenever the thermal diffusion length b and the coefficient of absorption for the light a are dimensioned for the measurement process. With the term light is meant all kinds of visible and non-visible electromagnetic radiation, for example UV-, IR- and X-ray radiation.

## CLAIMS

1. A method for analysis of a sample of a substance by means of photoacoustic or optothermal spectroscopy, wherein the sample (14) is placed in contact with a detector (12) which is illuminated by an intensity-modulated radiation of a certain wavelength, of which any radiation absorbed by the sample causes temperature variations which are converted to an electrical or optical signal in the detector, which signal is registrered,
c h a r a c t e r i z e d i r,
that the sample (14) is applied on a sample carrier (13) which is so dimensioned that $0.01 < a, b < 10$ for the sample carrier with the sample at the intended wavelength and the modulation frequency, where a is the absorption coefficient of the sample with sample carrier at the intended wavelength and b is the thermal diffusion length for the sample with the sample carrier at the intended modulation freqvecy, that the sample carrier before or after the application of the sample is brought to the close contact with the said detector (12) and that afterwards radiation fo the intended wavelength and the modulation frequency is directed against the sample.

2. A method according to claim 1,
c h a r a c t e r i z e d i n,
that the sample (14) is applied on a stratified sample carrier (13) having at least a bottom layer the thicknesss of which is at least about one thermal diffusion length b for the intended modulation frequency and for the intended sample, and that the sample carrier before or after the application of the sample is brought with the said bottom layer to close contact with detector (12).

3. A sample carrier for analysis of a sample of a substance in a photoacoustic or optothermal measurment cell, wherein the sample (14) is intended to be placed in contact with a detector (12) and is illuminated with modulated radiation of a certain wavelength according to the method stated in claim 1,

characterized in,

that the sample carrier (13) is so dimensioned that 0,01<a.b<10 for the sample carrier with the intended sample (14), where a is the absorption coefficient of the sample carrier with sample at the intended wavelength and b is the thermal diffusion length for the sample carrier with sample at the intended modulation frequency.

4. The sample carrier according to claim 3, characterized in, that the upper part is so designed that some components of the sample (14) are prevented from passing through the said part and that the lower part, which is intended to face the detector (12), has a thickness almost equal to or exceeding one thermal diffusion length for the sample carrier (13) with that part of the sample which is to be analyzed at the intended modulation frequency.

5. The sample carrier according to claim 3 or 4, characterized in, that it contains substances which at the presence of certain sample substances through chemical reaction generate a chromogenous substance with a characteristic absorption coefficient a, where 0,01<a.b<10 for the analysis intended for the sample carrier (13).

6. The sample carrier according to claim 3, characterized in, that it comprises two or several layers with different functions, for example filtration- and/or reagent addition functions, and that the layer which is intended to be placed closest to the detector (12) has a thickness which is at least about one thermal diffusion length b for the intended sample and the intended modulation frequency and that 0,01<a.b<10 for said layer at the intended wavelength and modulation frequency.

7. The sample carrier according to calim 6, characterized in,

that it comprises several layers where one or several layers contains substances which together with the intended sample substance (14) can generate a chromogenous substance in the bottom layer of the sample carrier (13), which is intended to face the detector (12), and that $0,01 < a.b < 10$ for said layer with the said chromogenous substance.

8. The sample carrier according to claim 6 or 7,
c h a r a c t e r i z e d   i n,
that the layer of the sample carrier (13) which is intended to be closest to the detector (12) comprises particles, the diameter of which is of the size one thermal diffusion length b for the intended sample.

9. The sample carrier according to claim 8,
c h a r a c t e r i z e d   i n,
that said particles are provided with reagents for the intended sample.

10. The sample carrier according to any of the claims 3-9,
c h a r a c t e r i z e d   i n,
that on the outside of the sample carrier and/or between different layers of the sample carrier there is placed a protective layer, which protects and encases e.g. reagents and which can be removed before measurment.

# FIG 1

12

13

14

15

11

# FIG 2

LIGHT ABSORPTION $\sim e^{-\alpha x}$

HEAT DIFFUSION

$e^{-x/b}$

FROM FOUR

DIFFERENT POSITIONS

IN THE SAMPLE

X

SAMPLE 14

TEMPERATURE

EXPANSION

ELEMENT 12

# FIG 3a

$a(cm^{-1})$        $b \cdot a$

METHYL GREEN

WAVE LENGTH (nm)

# FIG 3b

$a(cm^{-1})$        $b \cdot a$

METHYL GREEN

WAVE LENGTH (nm)